# EUROPEAN PATENT SPECIFICATION

(11) **EP 0 423 237 B1**
(45) Date of publication and mention of the grant of the patent: **11.05.1994**
(21) Application number: 89908933.8
(22) Date of filing: 29.06.1989
(51) Int. Cl.: F16L 37/00, H01R 13/66, B23Q 1/00

(54) **QUICK DISCONNECT COUPLING FOR USE WITH BOOM MOUNTS AND/OR TOOLING MOUNTS**
SCHNELL LÖSBARE KUPPLUNG ZUR VERWENDUNG BEIM AUFSPANNEN VON SPANNFUTTER UND/ODER WERKZEUGEN
ACCOUPLEMENT A DECONNEXION RAPIDE UTILISE AVEC DES MONTAGES DE MANDRINS ET/OU DES MONTAGES D'OUTILLAGE

(30) Priority: 06.07.1988 US 215743; 27.12.1988 US 290635; 17.05.1989 US 353395
(43) Date of publication of application: 24.04.1991
(73) Proprietor: BLATT, John A., Grosse Pointe Shores, MI 48236 (US)
(72) Inventor: BLATT, John A., Grosse Pointe Shores, MI 48236 (US)
(74) Representative: Pfenning, Meinig & Partner
(86) International application number: US8902911
(87) International publication number: WO9000515

(56) References cited:
- WO-A-86/01703
- US-A- 847 718
- US-A- 1 527 804
- US-A- 2 484 924
- US-A- 2 837 749
- US-A- 2 965 396
- US-A- 3 240 279
- US-A- 4 111 470

## Description

### BACKGROUND OF THE INVENTION

### Field of the Invention

The present invention is concerned with a quick disconnect coupling having integral fluid and/or electrical lines of the type used with master part transfer booms having changeable part handling spider booms and/or of the type used with tooling nests having changeable tooling assemblies.

### Description of the Relevant Art

An example of the relevant art is the inventor's U.S. Patent No. 4,650,234, which discloses a transfer boom assembly for workpieces. The master part transfer booms and their associated spider booms are tubular pieces, having fluid passages therein, which are relatively heavy and do not lend themselves to convenient coupling. Connection of workpiece carrying spider booms to related master booms is through a sliding bracket assembly which does not couple the internal fluid passages of the master boom to those of the spider boom. Following coupling, flexible fluid lines must be used to connect the internal passages in the master part transfer boom to the workpiece supporting spider boom when fluid transfer through the internal fluid passages of the spider boom is required. Additionally, no provision is made for electrical wiring which is required to transfer electrical signals to the spider boom and associated attachments. Following coupling, electrical wiring must be wired separately to the work piece supporting spider boom as required. Such an assembly is relatively complex, expensive, and demands a great deal of time and labor for assembly. Additionally, rigidity at the point of connection is lacking, and flexible fluid hoses, which are subject to damage, are exposed to a potentially harsh environment.

The above shortcomings are addressed by the design of the present invention.

### SUMMARY OF THE INVENTION

The present invention of a quick disconnect coupling can be adapted for use with boom mounts. In this form, the coupling comprises a quick disconnect boom mount having integral fluid lines which directly connect the fluid passages of a master part transfer boom to the internal fluid passages of a part handling spider boom. This eliminates the need for external fluid lines connecting these fluid passages and adds rigidity at the point of connection.

Additionally, the quick disconnect boom mount may have integral electrical lines with electrical connectors disposed at its mating ends for quickly and directly connecting internal electrical lines of the master part transfer boom to internal electrical lines of the part handling spider boom. This eliminates the need for external electrical lines at the point of connection.

The quick disconnect coupling is for use with a new type of boom having a rigid hollow boom sleeve containing internal fluid lines, and if desired, electrical lines. At points of workpiece connection, the fluid lines enter manifolds, disposed within the boom, and it is at these points that flexible fluid lines are connected to feed or supply external part handling equipment.

The quick disconnect coupling further comprises a rotary locking mechanism, having an eccentric cam disposed therein, which rigidly clamps the part handling spider to the master boom. Clamping is achieved using guide rods, fixedly connected to a first coupling member which is mounted to the spider boom. The guide rods slidingly engage guide rod receiving bores in a second coupling member which is mounted to the master boom. The first and second coupling members have respective end faces which seat in face-to-face engagement with each other when the guide rods of the first coupling member are inserted into the guide rod receiving bores of the second coupling member. Coupling is carried out while the rotary locking member is in a non-interference position. After coupling, the cam locking mechanism is rotated, preferably 180 degrees, to lock the eccentric cam member into a groove in one of the spider boom guide rods. To remove the spider boom from the master boom for replacement or repair, the rotary locking member is rotated from a locked position to a non-interference, unlocked, position where a detent means holds the locking mechanism in the unlock position. In the non-interference position, a clearance groove in the rotary locking member is presented to the guide rod allowing it, and the spider boom, to be slidingly disengaged from the master boom. Sealing means, such as O-rings or the like, are disposed within the quick disconnect boom mount to facilitate sealing of the fluid passages during connection.

The sliding engagement of the quick disconnect boom mount removes any shake or slop which is inherent in other disconnects.

Additionally, the high tolerance connection provided by the quick disconnect coupling allows integration of electrical means into the quick disconnect coupling. Electrical connections allow part proximity switches, and the like, to be permanently wired through the boom spiders, with wire harnesses routed inside the boom tubing. Such a design protects wiring from hazardous environments. Electrical connector means are disposed within the mating ends of the coupling members and are attached to electrical lines passing through longitudinally extending bores in the coupling members. When the first and second coupling members are brought into face-to-face engagement, the electrical connectors, disposed within the coupling members, are likewise brought into engagement thereby electrically connecting the wiring harnesses disposed within the master part transfer boom and the part handling spider boom. In the alternative, electrical plug means can make connection at quick disconnect faces of block-like coupling members.

The quick disconnect coupling can also be adapted for use with tooling mounts. In this form, the coupling comprises a quick disconnect tooling mount having integral fluid and electrical lines which directly connect the fluid passages and the electrical wiring of a master unit to those of a removable tooling nest assembly. This eliminates the need for external fluid and electrical connections, and greatly reduces the time required for replacement of tooling nests.

The quick disconnect tooling mount comprises upper and lower coupling members, each having respective end faces which are adapted to be seated in face-to-face engagement with one another. Guide rods through which fluid passages extend, project outwardly in a parallel relationship from the end face of one of the members. Guide rod receiving bores, which correspond in number to that of the guide rods, extend into a corresponding coupling member along parallel axes which are coaxial to the axes of the guide rods. The bores are adapted to matingly receive the guide rods therein so as to guide the coupling members to and from a coupled position. Fluid passages extend through the upper and lower coupling members with the fluid passages formed in the coupling member in which the guide rods are inserted being in communication with the fluid passages formed in the guide rods. In the coupling member in which the guide rod receiving bores are formed, the fluid passages communicate with the end portions of the bores so that the fluid passages in the first coupling member, the guide rods, and those in the second coupling member may be placed in fluid communication therewith when the coupling members are seated in face-to-face engagement.

In order to prevent separation of the upper and lower coupling members when the tooling nest is in use, a locking means disposed within the second coupling member is operable to retain the guide rods in engagement within the bores. The locking means comprises a locking member mounting bore which extends through the second coupling member along an axis which is normal to, and offset from, the guide rod receiving bores. The locking member mounting bore intersects the guide rod receiving bore so that a rotary locking member mounted within the locking member mounting bore, and having a cam locking means disposed thereon, can engage the guide rods when the coupling members are in a coupled position to retain the members in engagement therewith. Furthermore, passages are formed through the upper and lower coupling members for routing of electrical wiring therethrough. At corresponding positions on the end faces of the coupling members, connector means are disposed for connecting the electrical wiring in the upper coupling member with corresponding wiring in the lower coupling member when the faces are placed in face-to-face engagement allowing electrical signals to be transferred through the tooling mount to attached tooling nests.

In operation, clamping of the lower tooling nest to the upper mount unit is achieved by engaging the guide rods with the corresponding guide rod receiving bores in the corresponding coupling member. Initial engagement is carried out while the rotary locking member is in a non-interference position. After engagement, the cam locking mechanism is rotated to lock the eccentric cam member into grooves in the guide rods.

Removal of the tooling nests from the master unit for replacement or repair, is achieved by rotating the locking member from the locked position to the non-interference position. This allows the guide rods to be slidingly removed from the guide rod receiving bores.

Other objects and features of the invention will become apparent by reference to the following specification and to the drawings.

### BRIEF DESCRIPTION OF THE DRAWINGS

Fig. 1 is a partial side view of a master boom-spider boom assembly utilizing the present invention, with internal air passages shown in phantom;
Fig. 2 is a top view of the quick disconnect coupling with internal parts shown in phantom;
Fig. 3 is an end view showing a spider boom hookup;
Fig. 4 is an end view showing a master boom hookup with the cam locking pin shown in phantom;
Fig. 5 is a sectional view showing the cam locking mechanism in its unlocked position;
Fig. 6 is a sectional view showing the cam locking pin in its locked position;
Fig. 7 is a partial perspective view of the rotary locking member;
Fig. 8 is a schematic view of the displacement of the eccentric cam in the present invention;
Fig. 9 is a partial side view of a typical master boom-spider boom assembly utilizing the present invention;
Fig. 10 is a top view, partially in section, of the quick disconnect coupling;

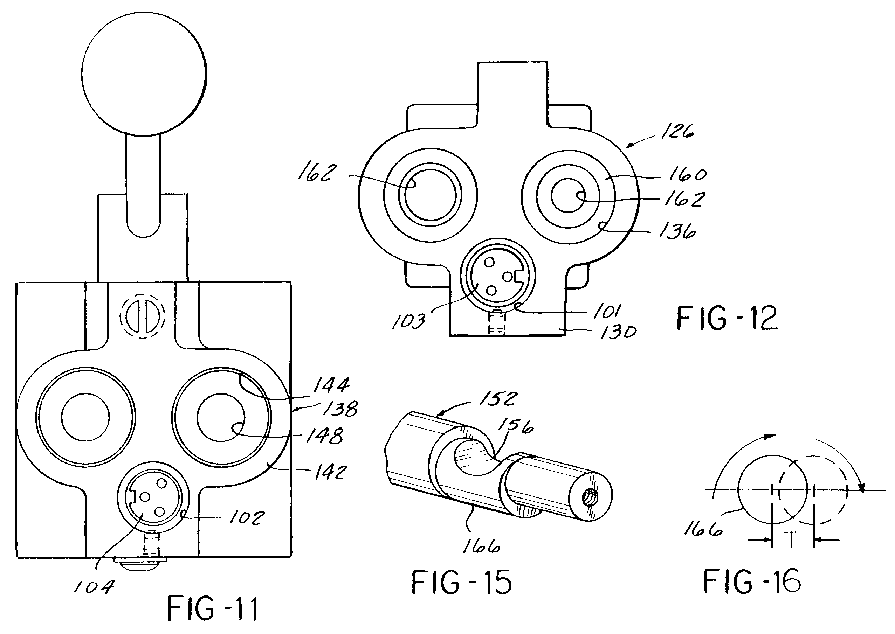

Fig. 11 is an end view of a master boom end face and its associated coupling member;
Fig. 12 is an end view of a spider boom end face and its associated coupling member;
Fig. 13 is a side view of one coupling member showing various internal details in phantom;
Fig. 14 is a side view of a second coupling member showing various internal details in phantom;
Fig. 15 is a partial perspective view of the rotary locking member;
Fig. 16 is a schematic view of the displacement of the eccentric cam in the present invention;
Fig. 17 is a side view of a quick disconnect coupling for a tooling mount with guide rods and locking means shown in phantom;
Fig. 18 is a side view of a rotary locking member;
Fig. 19 is a side view, partially in section, of a first coupling member;
Fig. 19A is a partial top view of the coupling member of Fig. 19 showing the electrical connection;
Fig. 20 is a side view of a second coupling member with guide rod receiving bores and rotary locking members shown in phantom;
Fig. 20A is a partial top view showing the electrical connection on the mating surface of the coupling member of Fig. 20;
Fig. 21 is a sectional view taken along line 5-5 of Fig. 18 showing the eccentric cam portion of a rotary locking member;
Fig. 22 is a sectional view taken along line 6-6 of Fig. 18 showing the rotational limit groove formed about the external circumference of the rotary locking member;
Fig. 23 is a sectional view taken along line 23-23 of Fig. 19;
Fig. 24 is a sectional view taken along line 24-24 of Fig. 20 showing the intersection of the locking member mounting bore with the guide rod receiving bore;
Fig. 25 is a side view of a guide rod; and
Fig. 26 is a top view of the guide rod shown in Fig. 25.

### BRIEF DESCRIPTION OF THE PREFERRED EMBODIMENT

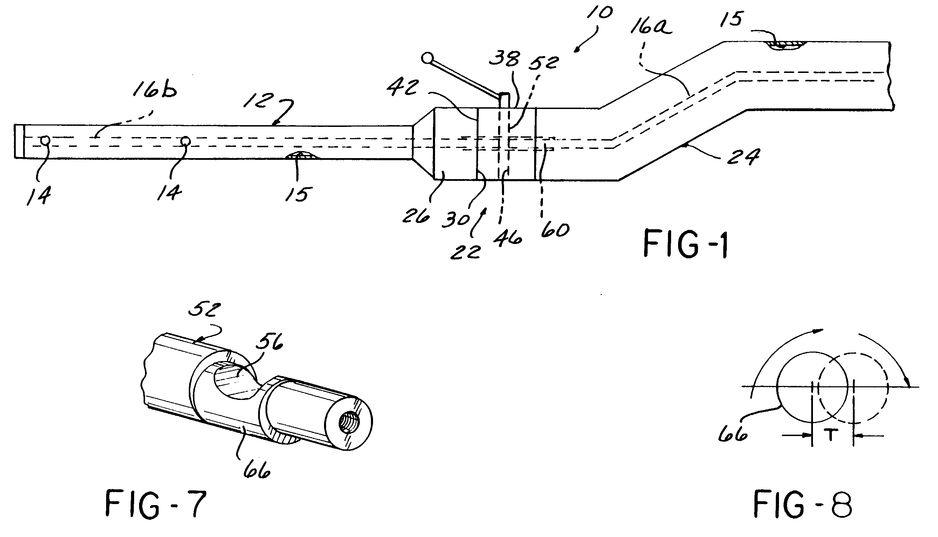

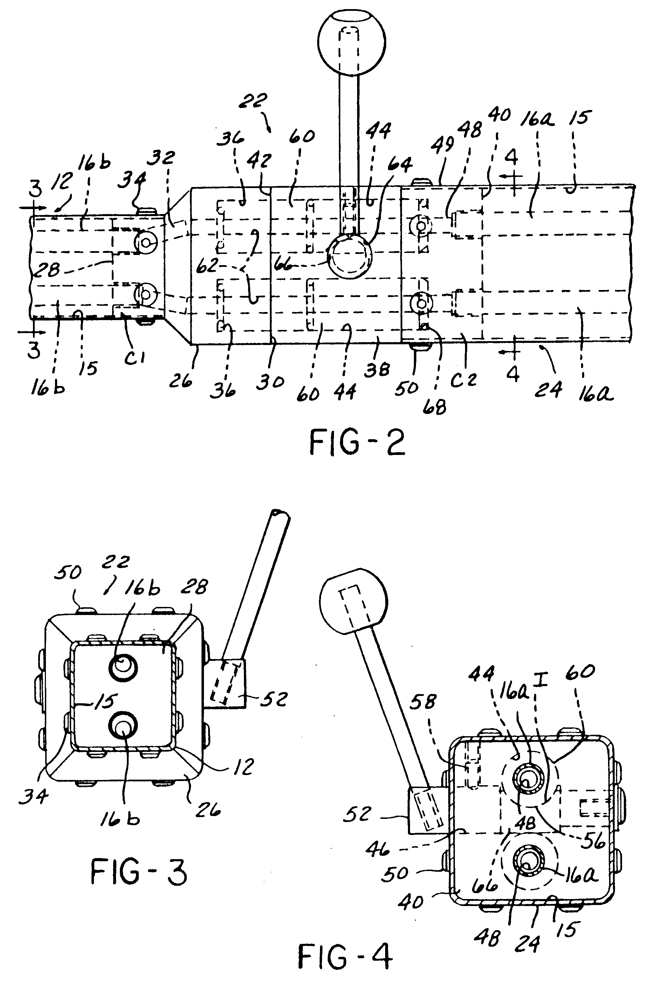

In Fig. 1, there is shown a transfer boom assembly, designated generally as 10, incorporating the quick disconnect coupling of the present invention. The transfer boom assembly comprises a workpiece handling spider boom 12, and a master boom 24, to which part handling equipment may be attached to support bars 14. The booms 12, 24 comprise hollow, rigid tubing 15, as shown in Figs. 3 and 4. The tubing 15 is preferably of steel and has fluid conduits 16a and 16b, useful for the passage of air and the like, disposed therein which extend longitudinally and in spaced, parallel relationship to the axis of each respective boom. Electrical wiring, not shown, may be disposed within the boom tubing 15 for sending signals to and from electrical apparatus attached to various workpieces.

To ease application of the transfer boom assembly 10 in a manufacturing environment, it is desirable to facilitate quick removal and replacement of the spider boom 12, from the master boom 24, utilizing the quick disconnect coupling or mount, designated generally 22. The mount comprises first and second block-like coupling members 26 and 38, respectively (see Figs. 2-4). Coupling members 26 and 38 have first end faces 30 and 42, respectively, which are adapted for face-to-face engagement when coupling members 26 and 38 are in a coupled position. The first coupling member 26 is configured as a manifold with internal fluid conduits 32 extending longitudinally therethrough, and offset in such a manner as to align with the passages 16a, 16b in both the master boom 24 and spider boom 12, respectively. A second end 28 of first coupling member 26 is configured to slidingly engage the end of spider boom 12 as shown at C1 in Fig. 2. The internal fluid conduits 32 of first coupling member 26 sealingly engage the fluid conduits 16b in spider boom 12, utilizing sealing means such as O-rings, when the spider boom 12 and first coupling member 26 are in engagement. Fixing means 34 fixedly attach the second end 28 of first coupling member 26 into engagement with spider boom 12. Fixing means 34 may comprise machine screws or other suitable means.

Two (2) guide rods 60 are fixedly mounted in mounting bores 36 in said first coupling member 26. The guide rods 60 are mounted by press fitting, or other suitable means for fixing, the rods 60 into the bores 36. The rods 60 project, in spaced parallel relationship to the axis of said first coupling member 26, from said first end face 30 of said first coupling member 26. Two (2) guide rod receiving bores 44 extend into the first end face 42, of second coupling member 38, in spaced, parallel relationship, longitudinally therewith and in alignment with the guide rods 60 projecting from said first coupling member 26. The receiving bores 44 are adapted to slidably receive said guide rods 60 to guide said first and second coupling members 26 and 38 to and from a coupled position.

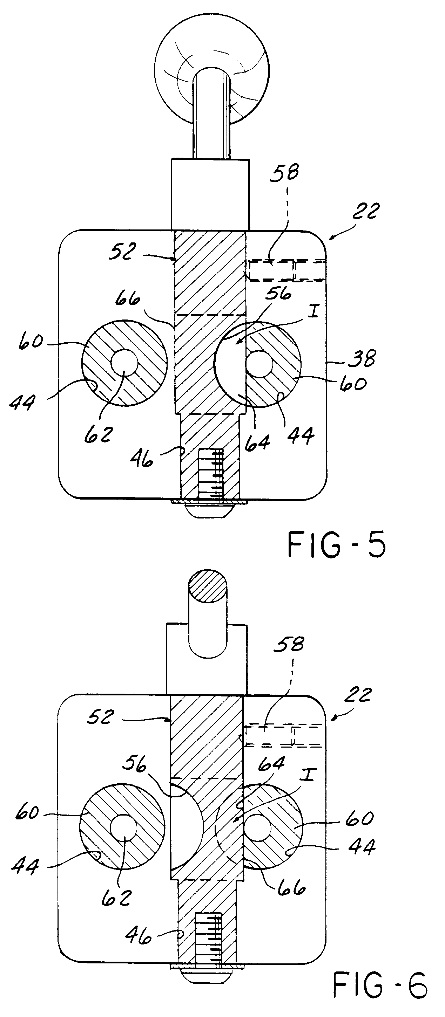

A third bore 46 extends through second coupling member 38 along a third axis normal to, and offset from, said axis of the guide rod receiving bores 44. The third bore 46, partially intersects one of the guide rod receiving bores 44, so as to create an interference, indicated at I in Figs. 4 through 6. The second end 40 of second coupling member 38 is configured to slidingly engage the end of master boom 24. Sealing means, such as O-rings, are disposed at the connecting face to sealingly engage the fluid conduits 16a in master boom 24 with fluid conduits 48 in second coupling member 30, described below. Fixing means 50, such as machine screws or other suitable means, are utilized to fixedly attach the second end 40 of second coupling member 38 into engagement with master boom 24.

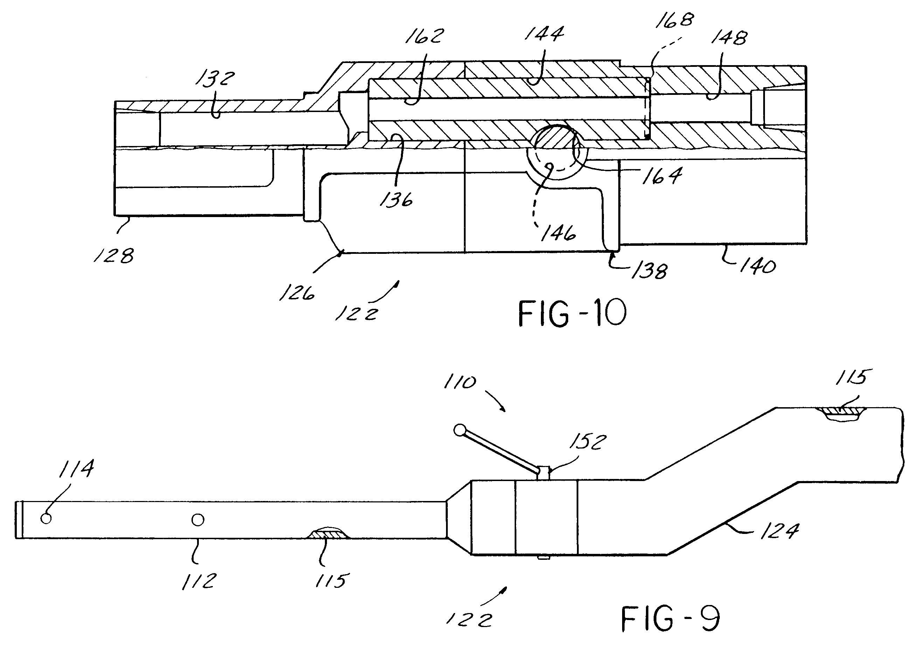

Rotatably mounted in third bore 46, of the second coupling member 38, is a rotary locking member 52, see Fig. 7. Rotary locking member 52 has an eccentric cam portion 66 formed thereon at the intersection I of the third bore 46 and the guide rod receiving bore 44, which it intersects. A clearance recess 56 is formed on the rotary locking member 52, diametrically opposed to the eccentric cam portion 66. Clearance recess 56 may be positioned to avoid interference with receiving bore 44, thereby accommodating insertion or withdrawal of guide rods 60. Detent means 58 may be disposed within the second coupling member 38 for locking the rotary locking member in a desired position.

A cam receiving recess 64 is formed in that guide rod 60 which is receivable in the guide rod receiving bore 44 through which third bore 46 partially intersects. The cam receiving recess 64 is positioned at the intersection I of the third bore 46 and the guide rod receiving bore 44.

Fluid passage bores 32, 48, 62 extend longitudinally through the first and second coupling members 26 and 38, and through guide rods 60, respectively, and are in coaxial fluid communication with each other when said coupling members 26 and 38 are seated in face-to-face engagement. The fluid passage bores 32, 48, 62 are useful for transferring working fluid from master boom fluid conduits 16a to spider boom fluid conduits 16b when said coupling members 26 and 38 are in a coupled position. Sealing means, such as O-rings or the like, are disposed at joining positions of fluid passage bores 32, 48, 62, allowing fluid tight coupling of said bores when in a coupled position as described below.

In operation, spider boom 12, to which first coupling member 26 and guide rods 60 are fixedly attached, is slidingly engaged with master boom 24, to which second coupling member 38 is fixedly attached. Upon engagement, guide rods 60, and electrical connectors, not shown, slidingly engage in guide rod receiving bores 44, and corresponding electrical connections, of second coupling member 38. Once seated, rotary locking member 52 is rotated, preferably 180 degrees, to move eccentric cam portion 66 into engagement with cam receiving recess 64, as shown in Fig. 6. The displacement of cam portion 66, indicated by T in Fig. 8, fully seats guide rods 60 against sealing means 68. Sealing means 68 may comprise O-rings or other suitable sealing devices. The engagement of eccentric cam portion 66 with cam receiving recess 64 will urge first and second coupling members 26 and 38 into locked, face-to-face engagement, thus preventing separation of spider boom 12 from master boom 24 and providing a rigid coupling having internal fluid passages and electrical lines sealingly engaged inside of the interlocking transfer boom assembly 10.

To remove spider boom 12, for replacement or repair, rotary locking member 52 is rotated 180 degrees to a non-interference position in which clearance recess 56, of rotary locking member 52, is presented to guide rod 60 and guide rod receiving bore 44 thus facilitating sliding removal of spider boom 12 from master boom 24.

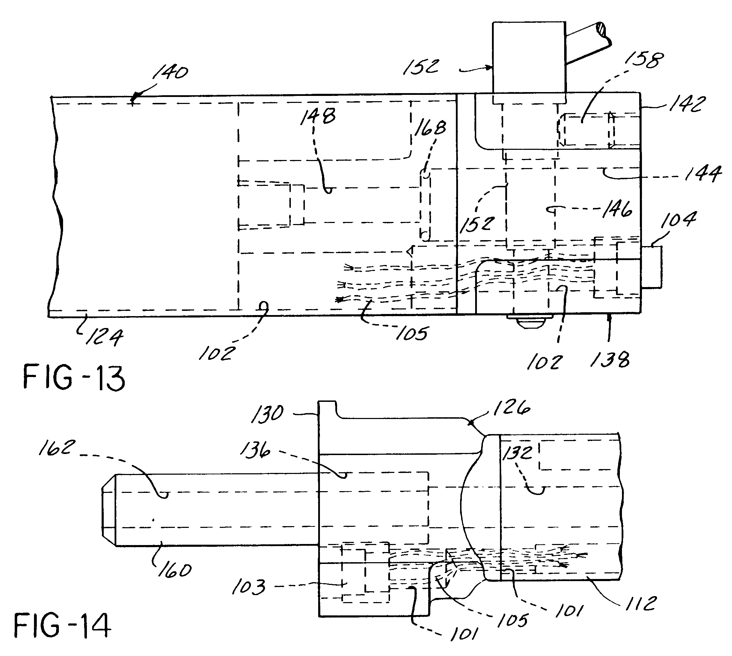

In Fig. 9, there is shown another transfer boom assembly, designated generally as 110, incorporating the quick disconnect coupling of the present invention. The transfer boom assembly comprises a workpiece handling spider boom 112, and a master boom 124. Support bars 114, extending outwardly from the transfer boom are utilized to support part handling equipment (not shown) attached thereto. The booms 112, 124 comprise hollow, rigid tubing 115, as shown in Figs. 13 and 14. The tubing 115 is preferably of steel and has fluid conduits (not shown) useful for the passage of air and the like, disposed therein which extend longitudinally and in spaced, parallel relationship to the axis of each respective boom. Electrical wiring 105 is disposed within the boom tubing 115 for sending signals to and from electrical apparatus attached to various workpieces.

To ease application of the transfer boom assembly 110 in a manufacturing environment, it is desirable to facilitate quick removal and replacement of the spider boom 112, from the master boom 124, utilizing the quick disconnect coupling or mount, designated generally 122. The mount comprises first and second coupling members 126 and 138, respectively. Coupling members 126 and 138 have first end faces 130 and 142, respectively, which are adapted for face-to-face engagement when coupling members 126 and 138 are in a coupled position. The first coupling member 126 is configured as a manifold with internal fluid conduits 132 extending longitudinally therethrough, and offset in such a manner as to align at one end with the passages in the master boom 124 and at the other end with the passages in the spider boom 112, respectively. A second end 128 of first coupling member 126 is configured to slidingly engage the end of spider boom 112 as shown in Fig. 14. The internal fluid conduits 132 of first coupling member 126 sealingly engage the fluid conduits in spider boom 112, utilizing sealing means such as O-rings, when the spider boom 112 and first coupling member 126 are engaged. Fixing means, such as screws (not shown), fixedly attach the second end 128 of first coupling member 126 into engagement with spider boom 112.

At least two (2) guide rods 160 are fixedly mounted in mounting bores 136 of first coupling member 126. The guide rods 160 are mounted into bores 136 by press fitting, or other suitable means for fixing. The rods 160 project, in spaced parallel relationship to the axis of first coupling member 126, from the first end face 130 of coupling member 126. At least two (2) guide rod receiving bores 144 extend into the first end face 142, of second coupling member 138, in spaced, parallel relationship, longitudinally therewith and in alignment with the guide rods 160 projecting from said first coupling member 126. The receiving bores 144 are adapted to slidably receive guide rods 160 to guide first and second coupling members 126 and 138 to and from a coupled position.

Electrical conduits 101 and 102 extend through first and second coupling members 126 and 138, respectively. The conduits 101 and 102 comprise longitudinally extending bores formed in the coupling members which are placed so as to avoid interference with the internal fluid conduits extending through the coupling members or the locking member, described below, utilized to hold first and second coupling members 126 and 138 into engagement. The electrical conduits 101 and 102 are formed in first and second coupling members 126 and 138 so as to extend in coaxial alignment with each other when the coupling members are brought into engagement. Disposed in electrical conduits 101 and 102 are electrical connector means 103 and 104, and associated electrical wiring 105, shown in Figs. 13 and 14. The electrical connectors may consist of male/female plug-type members which are slidably engageable with each other when end face 130 of the first coupling member is brought into face-to-face engagement with end face 142 of second coupling member 138. Engagement of the electrical connector means 103 and 104 disposed in electrical conduits 101 and 102 of first and second coupling members 126 and 138 allow electrical wiring harnesses disposed in spider boom 112 to be brought into engagement with corresponding electrical wiring harnesses disposed within master boom 124 without the necessity of external wiring following coupling of the transfer boom assembly.

A third bore 146 extends through second coupling member 138 along a third axis normal to, and offset from, the axes of the guide rod receiving bores 144. The third bore 146, partially intersects one of the guide rod receiving bores 144, creating an interference, indicated in Fig. 10. The second end 140 of second coupling member 138 is configured to slidingly engage the end of master boom 124. Sealing means, such as O-rings, are disposed at the connecting face to sealingly engage the fluid conduits in master boom 124 with fluid conduits 148 in second coupling member 138, described below. Fixing means, such as machine screws or other suitable means, are utilized to fixedly attach the second end 140 of second coupling member 138 into engagement with master boom 124.

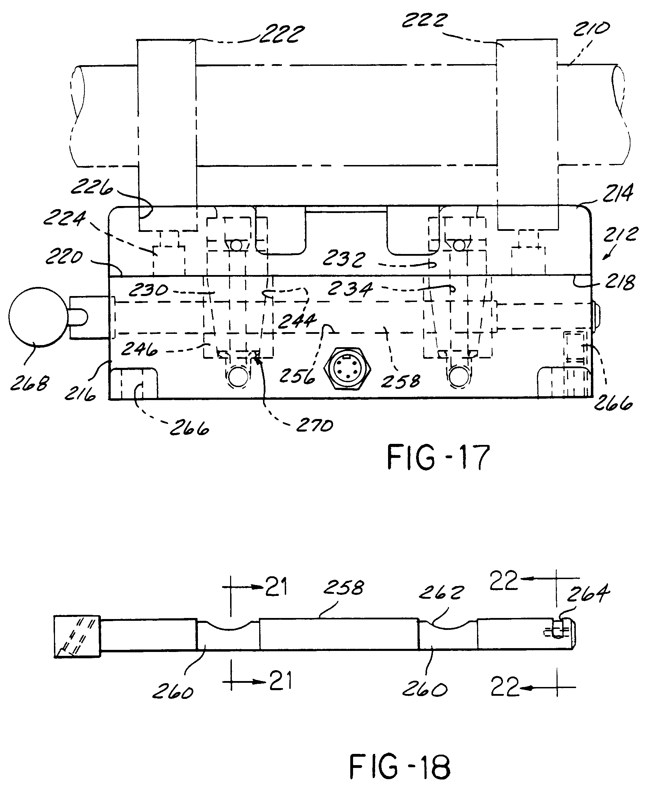

Rotatably mounted in third bore 146, of the second coupling member 138, is a rotary locking member 152. Rotary locking member 152 has an eccentric cam portion 166, shown in Fig. 15, formed thereon at the intersection of the third bore 146 and the guide rod receiving bore 144. A clearance recess 156 is formed on the rotary locking member 152, diametrically opposed to the eccentric cam portion 166. Clearance recess 156 may be positioned, upon rotation of locking member 152, to avoid interference with receiving bore 144, thereby accommodating insertion or withdrawal of guide rods 160. Detent means 158 may be disposed within the second coupling member 138 for maintaining the rotary locking member in a desired position.

A cam receiving recess 164 is formed in that guide rod 60 through which third bore 146 partially intersects. The cam receiving recess 164 is positioned at the intersection of the third bore 146 and the guide rod receiving bore 44.

Fluid conduits 132, 148, 162 extend longitudinally through the first and second coupling members 126 and 138, and through guide rods 160, respectively, and are in coaxial fluid communication with each other when coupling members 126 and 138 are seated in face-to-face engagement. The fluid conduits 132, 148, 162 transfer working fluid from master boom fluid conduits to spider boom fluid conduits when coupling members 126 and 138 are in a coupled position. Sealing means, such as O-rings or the like, are disposed at joining positions of fluid conduits 132, 148, 162, allowing fluid tight coupling of the bores when in a coupled position.

In operation, spider boom 112, to which first coupling member 126, guide rods 160, and electrical connector 103, are fixedly attached, is slidingly engaged with master boom 124, to which second coupling member 138 and corresponding electrical connector 104 is fixedly attached. Upon engagement, guide rods 160 and electrical connector 103 slidingly engage guide rod receiving bores 144 and corresponding electrical connector 104 of second coupling member 138. Once seated, rotary locking member 152 is rotated, preferably 180 degrees, to move eccentric cam, portion 166 into engagement with cam receiving recess 164, as shown in Fig. 10. The displacement of cam portion 166, indicated by T in Fig. 16, fully seats guide rods 160 against sealing means 168 and electrical connector 103 with electrical connector 104. Sealing means 168 may comprise O-rings or other suitable sealing devices. Additionally, the engagement of eccentric cam portion 166 with cam receiving recess 164 will urge first and second coupling members 126 and 138 into locked, face-to-face engagement preventing separation of spider boom 112 from master boom 124 and providing a rigid coupling having internal fluid conduits and electrical lines sealingly engaged within interlocking transfer boom assembly 110.

To remove spider boom 112, for replacement or repair, rotary locking member 152 is rotated 180 degrees to a non-interference position in which clearance recess 156, of rotary locking member 152, is presented to guide rod 160 and guide rod receiving bore 144 thus facilitating sliding removal of spider boom 112 from master boom 124.

In Fig. 17, there is shown in phantom, a portion of a transfer boom assembly, designated generally as 210, to which a quick disconnect coupling 212 for use with a tooling mount, embodying the present invention, has been attached. The quick disconnect coupling and tooling mount assembly comprises an upper or first coupling member 214 and a lower or second coupling member 216. The coupling members 214 and 216 have respective end faces 218 and 220 which are adapted to be seated in face-to-face engagement.

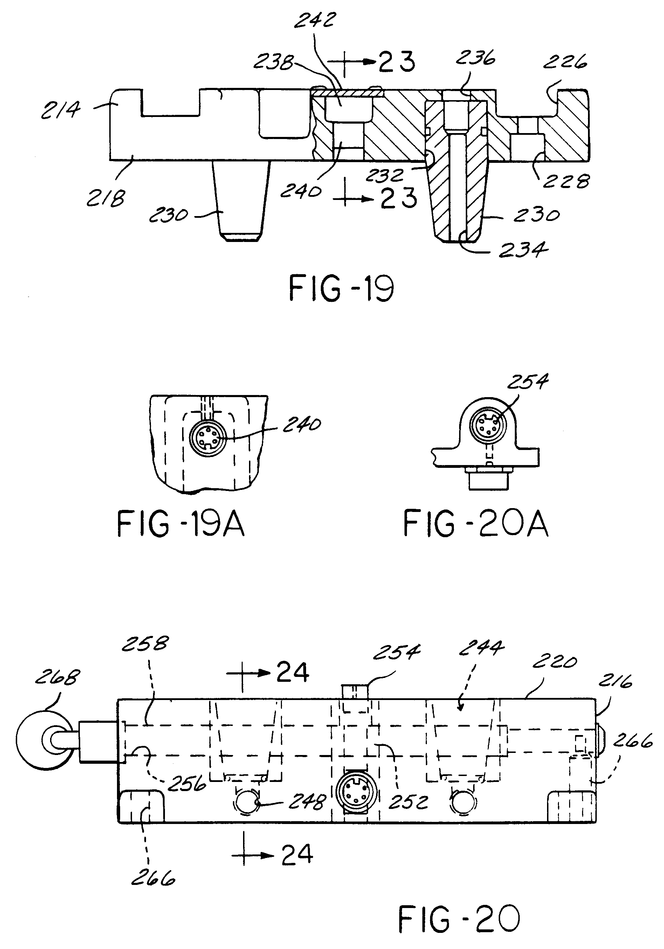

First coupling member 214 is fixedly attached to transfer boom 210 utilizing yoke 222 which is fastened to coupling member 214 utilizing suitable fasteners such as bolts 224. Yoke 222 engages coupling member 214 at attachment positions 226 (see Fig. 19). Bolts 224 pass through bolt holes 228 formed in coupling member 214 and into the base of yoke 222 providing an exceptionally rigid mounting of coupling member 214 to transfer boom 210. The first coupling member 214 is generally not removed from the transfer boom 210 unless damaged or until the work station, including the transfer boom 210, is modified. A series of guide rods 230, shown in Fig. 19, are fixedly mounted in guide rod receiving bores 232 which extend into end face 218. The guide rods 230 project outwardly from end face 218 in a spaced, parallel relationship to each other. The guide rods have slightly tapered end portions, shown in Fig. 19, which form a generally frusto-conical shape. The tapering of the guide rod ends allow the guide rods to slidingly engage rod receiving bores, to be described below, without binding or jamming, as would be the case with cylindrically shaped guide rods.

Additionally, guide rods 230 have fluid passages 234 extending longitudinally therethrough. The fluid passages 234 are designed to communicate with corresponding fluid passages 236 formed in first coupling member 214. As seen in Fig. 19, fluid passages 236 provide fluid communication between the guide rods and the exterior of the coupling member, for attachment of fluid lines (not shown) routed through transfer boom 210.

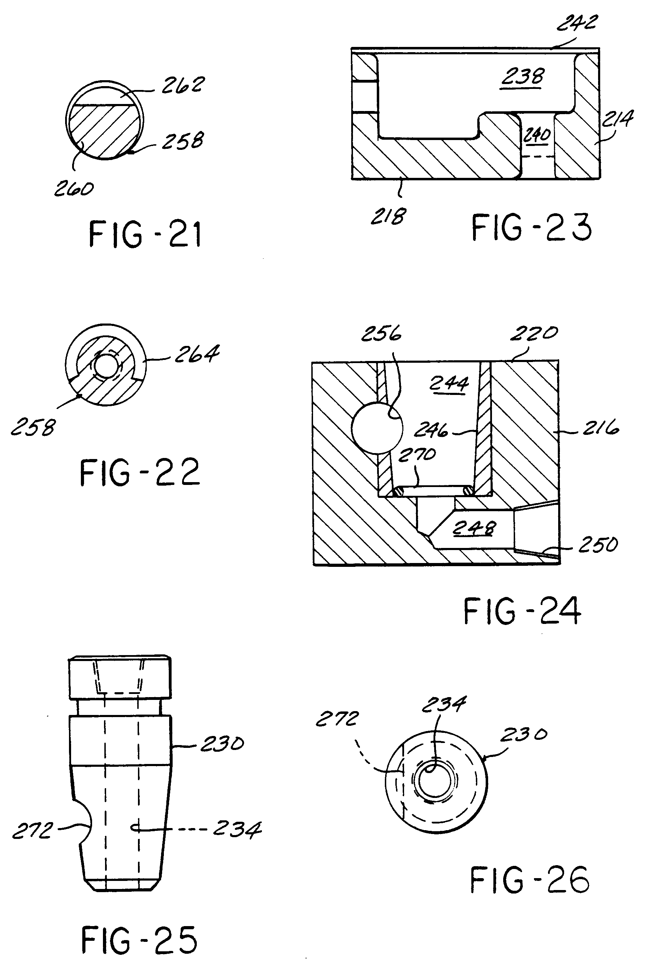

In a manner similar to the routing of fluid passages 234 and 236 through coupling member 214, electrical passages 238 (see Figs. 19 and 23) are provided for routing electrical lines from transfer boom 210 through quick disconnect tooling mount assembly 212. Electrical lines may be passed through electrical passages 238 to terminate at connector 240 (see Fig. 19A). An access panel 242 is provided to allow installation or repair of electrical wiring routed from transfer boom 210 to connector 240. Guide rod receiving bores 244, shown in Fig. 20, extend into second, lower coupling member 216 from end face 220. The guide rod receiving bores 244 correspond in number to the guide rods 230 and are similarly spaced in a parallel relationship having axes coaxial to guide rods 230 so as to be adapted to slidably receive the guide rods when the end faces 218 and 220 of first and second coupling members 214 and 216 are seated in face-to-face engagement. Sleeves 246 may be placed within guide rod receiving bores 244 to duplicate the tapered configuration of guide rods 230 thereby providing a tight fit in which the guide rod faces are seated adjacent to sleeves 246.

As with first coupling member 214, fluid passages 248 (see Fig. 24) extend through second coupling member 216 from the base or blind end of guide rod receiving bore 244 to connecting point 250, positioned at the exterior of the coupling member. An electrical connector 254 (see Fig. 20A) corresponding to connector 240 of first coupling member 214, is positioned on end face 220 of lower coupling member 216 to engage connector 240 when the coupling members are brought into face-to-face engagement. Coupling of electrical connector 240 with connector 254 allows electrical connection to be established between transfer boom 210, through the quick disconnect tooling mount assembly 212, to tooling nests mounted to lower coupling member 216. As a result, control signals may be conveniently routed through the transfer boom and tooling mount assembly negating the need for external wiring harnesses which are subject to damage in harsh environments.

When end face 218 of upper coupling member 214 is brought into face-to-face engagement with end face 220 of second coupling member 216, guide rods 230 slidingly engage guide rod receiving bores 244. Once in engagement, the fluid passages 234 and 236 disposed in guide rods 230 and upper coupling member 214, are brought into fluid engagement with fluid passages 248, disposed in lower coupling member 216. Thus, in a similar fashion to the establishment of electrical connection between the transfer boom and the lower tooling nests attached to the second coupling member 216, fluid connections are established between fluid lines of transfer boom 210 and connecting point 250 of lower coupling member 216 thereby allowing fluid connection to be made to lower tooling nests which are attached to second, lower coupling member 216.

In order to maintain first, upper coupling member 214 in fluid tight engagement with second, lower coupling member 216, while allowing ease of separation, should it be desirable to remove lower coupling member 216 and its associated tooling nest, a locking member mounting bore 256 is provided which extends through second coupling member 216 along an axis normal to, and offset from, the axes of guide rod receiving bores 244, as shown in Fig. 24. The locking member mounting bore 256 partially intersects guide rod receiving bores 244 thereby creating an interference. Rotatably mounted within locking member mounting bore 256 is a rotary locking member 258, shown in Fig. 18. Formed on rotary locking member 258 are eccentric cam portions 260 (Fig. 21) located at the intersections of the locking member mounting bore 256 and guide rod receiving bores 244. Diametrically opposed to eccentric cam portions 260 are clearance recesses 262. Additionally, a groove 264, shown in Fig. 22, may be formed about the circumference of one end of rotary locking member 258. Groove 264 describes a predetermined arc about the circumference of rotary locking member 258 so that when locking member 258 is positioned within lower coupling member 216, a pin stop 266 slidingly engages groove 264 to limit rotation of rotary locking member 258 within locking member mounting bore 256 to the predetermined arc of groove 264.

In operation, a tool assembly or tooling nest is attached to lower coupling member 216 utilizing bolts which pass through bolt holes 266 formed in lower coupling member 216. Other fastening means may be used depending on the application and manufacturing requirements. Subsequently, rotary locking member 258, installed in coupling member 216, is rotated using handle 268, into a non-interference position in which clearance recesses 262 are positioned to face guide rod receiving bores 244 to accommodate insertion of guide rods 230 into receiving bores 244. Lower coupling member 216, and its associated tooling nest, is then brought into position to allow guide rods 230 to slidingly engage guide rod receiving bores 244 thereby cooperating to guide coupling members 214 and 216 into a face-to-face coupled position in which fluid and electrical connections are established between upper and lower coupling members. Sealing means, such as O-rings 270, are provided between guide rods 230 and guide rod receiving bores 244 to establish a fluid-tight seal between coupling members 214 and 216. Subsequently, rotary locking member 258 is rotated to a locked position in which eccentric cam portions 260 engage cam receiving recesses 272, formed in guide rods 230, (see Figs. 25 and 26) to retain coupling members 214 and 216 in a coupled position. Removal of lower tooling member 216 and its associated tooling nest is simply the reversal of installation.

## Claims

1. A quick disconnect coupling comprising:
a first (26,126,214) and a second (38,138,216) coupling member having respective end faces (30,42;130,142;218,220) adapted to be seated in face-to-face engagement;
at least one guide rod (60,160,230) fixedly mounted in said first coupling member (26,126) and projecting in an outwardly extending relationship from said end face (30,130,218) of said first coupling member (26,126,214);
means defining at least one guide rod receiving bore (44,144,244) extending into said second coupling member (38,138,216) from the end face (42,142,220) of said second coupling member (38,138,216) adapted to slidably receive said guide rod (60,160,230)), said guide rod (60,160,230) and said receiving bore (44,144,244) cooperating to guide said coupling members (26,38;126,138;214,216) to and from a coupled position;
means defining a locking member mounting bore (46,146,256) extending through said second coupling member (38,138,216) along an axis normal to, and offset from said guide rod receiving bore (44,144,244), said locking member mounting bore (46,146,256) intersecting said guide rod receiving bore (44,144,244);
a rotary locking member (52,152,258) mounted within said locking member mounting bore (44,144,244) for rotation therein;
locking means (66,166;56,156;260,262), disposed on said rotary locking member (52,152,258) for engagement with said guide rod (60,160,230) when said coupling members (26,38;126,138;214,216) are in a coupled position to retain said members in said coupled position.

2. A quick disconnect coupling, as defined in claim 1, further comprising:
means defining fluid passage bores (32,48,62; 132,148,162;236,234,248) extending through said first and second coupling members (32,48;132, 148;214,216) and said at least one guide rod (60,
160,230) in coaxial fluid communication with each other when said coupling members are in said coupled position.

3. A quick disconnect coupling, as defined in claim 1 or 2, further comprising sealing means disposed between said guide rod and coupling members when said coupling members are in said coupled position.

4. A quick disconnect coupling, as defined in one of claims 1 to 3, said guide rod further comprising:
a cam receiving recess (64,164,272) formed in the exterior of said guide rod (60,160,230) at a longitudinal position corresponding to said interference position of said locking member mounting bore (46,146,256) when said guide rod (60,160,230) is slidably received within said guide rod receiving bore (44,144,244).

5. A quick disconnect coupling, as defined in claim 4, said locking means further comprising:
an eccentric cam portion (66,166,260) on said locking member (52,152,258) at the intersection of said locking member mounting bore (46,146, 256) and said guide rod receiving bore (44,144, 244);
a clearance recess (56,156,262) in said locking member, diametrically opposed to said eccentric cam portion (66,166,260);
said rotary locking member (52,152,258) being rotatable within said locking member mounting bore (46,146,256) between a release position, in which said clearance recess (56,156,262) is positioned to accomodate insertion or withdrawal of said guide rod (60,160,230) into or from said guide rod receiving bore (44,144,244), and a locked position in which said cam portion (66, 166,260) is engaged within said cam receiving recess (64,164,272) to retain said coupling members in a coupled position.

6. A quick disconnect coupling, as defined in one of claims 1 to 5, said rotary locking member (258) further comprising:
a groove (264) formed about a predetermined arc of the circumference of said rotary locking member (264);
a pin stop (266), disposed in said second coupling member and projecting into said locking member mounting bore for sliding engagement with said groove (264) to limit rotation of said rotary locking member (258) wikthin said locking member mounting bore (256) to said predetermined arc.

7. A quick disconnect coupling, as defined in one of claims 1 to 6, further comprising:
electrical means (238) extending through said first and second coupling members;
electrical connector means (240,254), connected to said electrical means, disposed at the said faces of said coupling members for connecting said electrical means in said first and second coupling members when said coupling members are in a coupled position.

8. A quick disconnect coupling, as defined in of of claims 1 to 7, wherein said outwardly extending guide rod end(230) further comprises a tapered end portion of a generally frusto-conical shape.

9. A quick disconnect coupling according to one of claims 1 to 8 comprising at least two guide rods (60,160,230) projecting in spaced parallel relationship from said end face of said first coupling member (26,126,214) and
means defining guide rod receiving bores (44, 144,244) corresponding in number to said guide rods (60,160,230) extending into said second coupling member (38,138,216) along spaced parallel axes.

10. A quick disconnect coupling according to claim 9, wherein said locking member mounting bore (46,146) intersects one of said guide rod receiving bores (44,144) the corresponding guide rod (60,160) having said cam receiving recess (64, 164).

11. A quick disconnect coupling according to claim 9, wherein said locking member mounting bore (244) intersects all of said guide rod receiving bores (244) each guide rod (230) having said cam receiving recess (272).

## Patentansprüche

1. Schnelltrennkupplung mit einem ersten (26,126,214) und einem zweiten (38,138,216) Kupplungselement, die jeweils Stirnflächen (30,42;130,142;218,220) zur Lagerung in einem stirnseitigen Eingriff aufweisen;
mindestens einer ersten Führungsstange (60,160,230), die starr an dem ersten Kupplungselement (26,126) befestigt ist und in einer nach außen erstreckenden Beziehung von der Stirnfläche (30,130,218) des ersten Kupplungselementes (26,126,214) herausragt;
Mitteln, die mindestens eine Bohrung (44,144,244) zur Aufnahme der Führungsstange begrenzen, wobei die Bohrung sich von der Stirnfläche (42,142,220) des zweiten Kupplungselementes (38,138,216) in dieses hinein erstreckt und geeignet ist, die Führungsstange (60,160,230) gleitend aufzunehmen und wobei die Führungsstange (60,160,230) und die Aufnahmebohrung (44,144,244) zusammenarbeiten, um die Kupplungselemente (26,38;126,138;214,216) in die oder aus der Kupplungsstellung zu führen;
Mitteln, die eine Befestigungsbohrung (46,146,256) für ein Verriegelungsglied begrenzen, die sich längs einer senkrecht und versetzt zu der Aufnahmebohrung (44,144,244) für die Führungsstange angeordneten Achse erstreckt, wobei die Befestigungsbohrung (46,146,256) für ein Verriegelungsglied die Aufnahmebohrung (44,144,244) für die Führungsstange schneidet;
einem drehbaren Verriegelungsglied (52,152,258), das in der Befestigungsbohrung (44,144,244) darin drehbar befestigt ist;
Verriegelungsmitteln (66,166;56,156;260,262), die an dem drehbaren Verriegelungsglied (52,152,258) angeordnet sind und in die Führungsstange (60,160,230) eingreifen, wenn die Kupplungselemente (26,38;126,138;214,216) sich in der Kupplungsstellung befinden, um sie in der Kupplungsstellung zu halten.

2. Schnelltrennkupplung nach Anspruch 1 weiterhin mit
Mitteln, die Durchgangsbohrungen (32,48,62;132,148,162;236,234,248) für ein Fluid begrenzen, wobei die Durchgangsbohrungen sich durch das erste und zweite Kupplungselement (32,48;132,148;214,216) und durch die mindestens eine Führungsstange (60,160,230) erstrecken und miteinander koaxial für den Fluidaustausch verbunden sind, wenn sich die Kupplungselemente in der Kupplungsstellung befinden.

3. Schnelltrennkupplung nach Anspruch 1 oder 2 weiterhin mit Dichtungsmitteln, die zwischen der Führungsstange und den Kupplungselementen angeordnet sind, wenn die Kupplungselemente sich in der Kupplungsstellung befinden.

4. Schnelltrennkupplung nach einem der Ansprüche 1 bis 3, wobei die Führungsstange eine Nockenaufnahmevertiefung (64,164,272) in dem äußeren Umfang der Führungsstange (60,160,230) an einer Längsposition entsprechend der Eingriffposition der Befestigungsbohrung (46,146,256) für das Verriegelungsglied, wenn die Führungsstange (60,160,230) gleitend in der Aufnahmebohrung (44,144,244) aufgenommen ist, aufweist.

5. Schnelltrennkupplung nach Anspruch 4, wobei die Verriegelungsmittel weiterhin umfassen:
einen exzentrischen Nockenbereich (66,166,260) auf dem Verriegelungsglied (52,152,258) an der Überschneidung der Befestigungsbohrung (46,146,256) für das Verriegelungsglied und der Aufnahmebohrung (44,144,244) für die Führungsstange,
eine Ausnehmung (56,156,262) in dem Verriegelungsglied, diametral zu dem exzentrischen Nockenbereich (66,166,260) gegenüberliegend, wobei das drehbare Verriegelungsglied (52,152,258) in der Befestigungsbohrung zwischen einer Freigabestellung, in der die Ausnehmung (56,156,262) für ein Einführen in oder Herausziehen der Führungsstange (60,160,230) in oder aus der Aufnahmebohrung (44,144,244) positioniert ist, und einer Verriegelungsstellung, in der der Nockenbereich (66,166,260) mit der Nockenaufnahmevertiefung (64,164,272) in Eingriff steht, um die Kupplungselemente in der Kupplungsstellung zu halten, drehbar angeordnet ist.

6. Schnelltrennkupplung nach einem der Ansprüche 1 bis 5, wobei das drehbare Verriegelungsglied (258) weiterhin umfaßt:
eine Nut (264), die um einen vorbestimmten Bogen des drehbaren Verriegelungsgliedes (264) ausgeformt ist;
einen Stiftanschlag (266), der in dem zweiten Kupplungselement angeordnet ist und in die Verriegelungsglied-Befestigungsbohrung für einen gleitenden Eingriff mit der Nut (264) hereinragt, um die Drehung des drehbaren Verriegelungsgliedes (258) in der Befestigungsbohrung (256) auf den vorbestimmten Bogen zu begrenzen.

7. Schnelltrennkupplung nach einem der Ansprüche 1 bis 6, weiterhin mit elektrischen Mitteln (238), die sich durch das erste und zweite Kupplungselement erstrecken, elektrischen Verbindungsmitteln (240,254), die mit den elektrischen Mitteln verbunden sind und an den Stirnflächen der Kupplungselemente zum Verbinden der elektrischen Mittel in dem ersten und zweiten Kupplungselement, wenn diese in der Kupplungsstellung sind, angeordnet sind.

8. Schnelltrennkupplung nach einem der Ansprüche 1 bis 7, wobei das sich nach außen erstreckende Ende (230) der Führungsstange einen angeschrägten Endbereich in einer kegelstumpfartigen Form aufweist.

9. Schnelltrennkupplung nach einem der Ansprüche 1 bis 8 mit mindestens zwei Führungsstangen (60,160,230), die sich im Abstand und parallel zueinander von der Stirnfläche des ersten Kupplungselementes (26,126,214) herausragend erstrecken und Mitteln, die Aufnahmebohrungen (44,144,244) für die Führungsstangen (60,160,230) entsprechend ihrer Zahl begrenzen, wobei die Aufnahmebohrungen sich in dem zweiten Kupplungselement (38,138,216) entlang paralleler mit Abstand zueinander angeordneter Achsen erstrecken.

10. Schnelltrennkupplung nach Anspruch 9, wobei die Befestigungsbohrung (46,146) für das Verriegelungsglied eine der Aufnahmebohrungen (44,144) für die Führungsstangen schneidet, wobei die entsprechende Führungsstange (60,160) eine Nockenaufnahmevertiefung (64,164) aufweist.

11. Schnelltrennkupplung nach Anspruch 9, wobei die Befestigungsbohrung (256) für das Verriegelungsglied alle Aufnahmebohrungen (244) für die Führungsstangen schneidet, wobei jede Führungsstange (230) die Nockenaufnahmevertiefung (272) aufweist.

## Revendications

1. Accouplement à séparation rapide comprenant :
- un premier (26, 126, 214) et un second (38, 138, 216) éléments d'accouplement ayant leurs faces d'extrémités respectives (30, 42 ; 130, 142 ; 218, 220) conçues pour être accouplées face à face ;
- au moins une tige de guidage (60, 160, 230) montée solidaire dans le premier élément d'accouplement (26, 126) et qui se projette vers l'extérieur de la face d'extrémité (30, 130, 218) du premier élément d'accouplement (26, 126, 214) ;
- des moyens définissant au moins un perçage de réception de la tige de guidage (44, 144, 244) qui s'étend à l'intérieur du second élément d'accouplement (38, 138, 216) à partir de la face d'extrémité (42, 142, 220) de celui-ci et recevant à coulissement ladite tige de guidage (60, 160, 230), qui avec le perçage de réception (44, 144, 244) coopèrent pour guider les éléments d'accouplement (26, 38 ; 126, 138 ; 214, 216) en va et vient par rapport à une position d'accouplement ;
- des moyens définissant un perçage pour le montage de l'élément de verrouillage (46, 146, 256) qui s'étend dans le second élément d'accouplement (38, 138, 216) suivant un axe perpendiculaire, et qui est décalé par rapport audit perçage de réception de la tige de guidage (44, 144, 244), ledit perçage pour le montage de l'élément de verrouillage (46, 146, 256) concourant avec le perçage de réception de la tige de guidage (44, 144, 244) ;
- un élément de verrouillage rotatif (52, 152, 258) monté à l'intérieur du dit perçage pour le montage de l'élément de verrouillage (44, 144, 244) ;
- des moyens de verrouillage (66, 166 ; 56, 156 ; 260, 262) disposés sur l'élément de verrouillage rotatif (52, 152, 258) venant en prise avec la tige de guidage (60, 160, 230) lorsque les éléments d'accouplement (26, 38 ; 126, 138 ; 214, 216) sont en position d'accouplement pour maintenir lesdits éléments dans cette position.

2. Accouplement à séparation rapide, selon la revendication 1, comprenant de plus :
- des moyens définissant des perçages (32, 48, 62 ; 132, 148, 162 ; 236, 234, 248) pour le passage d'un fluide qui s'étendent à travers les premier et second éléments d'accouplement (32, 48 ; 132, 148 ; 214, 216) et à travers au moins une tige de guidage (60, 160, 230) et communicant entre eux de manière co-axiale lorsque les éléments d'éccouplement sont en position d'accouplement.

3. Accouplement à séparation rapide, selon la revendication 1 ou 2, comprenant de plus des moyens d'étanchéité disposés entre la tige de guidage et les éléments d'accouplement lorsque ces éléments sont dans leur position d'accouplement.

4. Accouplement à séparation rapide selon l'une quelconque des revendications 1 à 3, la tige de guidage comprenant de plus :
une encoche de réception de came (64, 164, 272) formée à l'extérieur de la tige de guidage (60, 160, 230) en position longitudinale correspondant à la position d'interférence du perçage (46, 146, 256) pour le montage de l'élément de verrouillage, lorsque ladite tige de guidage (60, 160, 230) est engagée à coulissement dans le perçage (44, 144, 244).

5. Accouplement à séparation rapide, selon la revendication 4, les moyens de verrouillage comprenant en outre :
une came excentrée (66, 166, 260) sur l'élément de verrouillage (52, 152, 258) à l'intersection du perçage (46, 146, 256) pour le montage de l'élément de verrouillage et dudit perçage de réception de la tige de guidage (44, 144, 244) ;
une encoche de dégagement (56, 1546, 262) dans l'élément de verrouillage, diamétralement opposée à la partie excentrée de la came (66, 166, 260) ;
l'élément de verrouillage rotatif (52, 152, 258) pouvant être mis en rotation à l'intérieur du perçage (46, 146, 256) pour le montage de l'élément de verrouillage entre une position libre, dans laquelle l'encoche de dégagement (56, 156, 262) est positionnée pour s'adapter à l'insertion de la tige de guidage (60, 160, 230) dans ledit perçage de réception de la tige de guidage (44, 144, 244) ou à son retrait, et une position verrouillée dans laquelle ladite partie de came (66, 166, 260) est en prise avec l'encoche (64, 164, 272) pour maintenir lesdits éléments d'accouplement en position d'accouplement.

6. Accouplement à séparation rapide, selon l'une quelconque des revendications 1 à 5, l'élément de verrouillage rotatif (258) comprenant de plus :
une rainure (264) formée sur un arc prédéterminé de la circonférence de l'élément de verrouillage rotatif (258) ;
une goupille d'arrêt (266) disposée dans ledit second élément d'accouplement et qui se projette dans ledit perçage pour le montage de l'élément de verrouillage pour coulisser dans ladite rainure (264) afin de limiter la rotation de l'élément de verrouillage rotatif (258) à l'intérieur du perçage pour le montage de l'élément de verrouillage (256) audit arc prédéterminé.

7. Accouplement à séparation rapide, selon l'une quelconque des revendications 1 à 6, comprenant en outre :
des moyens électriques (238) s'étendant dans lesdits premier et second éléments d'accouplement ;
des moyens de liaison électriques (240, 254) reliés aux moyens électriques et disposés sur les faces des éléments d'accouplement pour relier les moyens électriques aux premier et second éléments d'accouplement lorsque ceux-ci sont en position d'accouplement.

8. Accouplement à séparation rapide, selon l'une quelconque des revendications 1 à 7, dans lequel l'extrémité de la tige de guidage (230) qui s'étend vers l'extérieur comprend de plus une extrémité effilée de forme globalement tronconique.

9. Accouplement à séparation rapide selon l'une quelconque des revendications 1 à 8, comprenant au moins deux tiges de guidage (60, 160, 230) parallèles par rapport à ladite face extrème du premier élément d'accouplement (26, 126, 214) et
des moyens définissant des perçages de réception de la tige de guidage (44, 144, 244) correspondant au nombre de tiges de guidage (60, 160, 230) et s'étendent parallèlement dans ledit second élément d'accouplement (38, 138, 216).

10. Accouplement à séparation rapide selon la revendication 9, dans lequel le perçage (46, 146) pour le montage de l'élément de verrouillage croise l'un des perçages de réception de la tige de guidage (44, 144), la tige de guidage correspondant (60, 160) comportant l'encoche de réception de came (64, 164).

11. Accouplement à séparation rapide sleon la revendication 9, dans lequel le perçage (244) pour le montage de l'élément de verrouillage croise tous les perçages de réception de la tige de guidage (244), chaque tige de guidage (230) comportant ladite encoche de réception de came (272).
